# EUROPÄISCHE PATENTSCHRIFT

(11) **EP 3 753 876 B1**
(45) Veröffentlichungstag und Bekanntmachung des Hinweises auf die Patenterteilung: **04.06.2025**
(21) Anmeldenummer: 20167576.6
(22) Anmeldetag: 01.04.2020
(51) Int. Cl.: B65G 47/86, B65B 11/28, B65B 25/00

(54) **VORRICHTUNG UND VERFAHREN ZUM TRANSPORTIEREN UND GGF. VERPACKEN KLEINSTÜCKIGER ARTIKEL MIT WENIGSTENS ZWEI ROTATIONSKÖPFEN MIT SICH SCHNEIDENDEN TEILKREISEN**
METHOD AND DEVICE FOR TRANSPORTING AND PACKAGING OF SMALL ITEMS WITH AT LEAST TWO ROTATING HEADS WITH INTERSECTING PARTIAL CIRCLES
DISPOSITIF ET PROCÉDÉ DE TRANSPORT ET ÉVENTUELLEMENT D'EMBALLAGE D'ARTICLES DE PETITE TAILLE À L'AIDE D'AU MOINS DEUX TÊTES ROTATIVES POURVUES DE CERCLES PRIMITIFS S'ENTRECOUPANT

(30) Priorität: 19.06.2019 DE 102019208894
(43) Veröffentlichungstag der Anmeldung: 23.12.2020
(73) Patentinhaber: Theegarten-Pactec GmbH & Co. KG, 01237 Dresden (DE)
(72) Erfinder: Wehner, Gert, 01328 Dresden (DE); Bergmann, Matthias, 01728 Bannewitz (DE); Seibt, Wilfried, 01640 Coswig (DE)
(74) Vertreter: Grünecker Patent- und Rechtsanwälte PartG mbB

(56) Entgegenhaltungen:
- EP-A1- 0 659 683
- EP-A1- 2 415 538
- DE-A1- 102006 023 531
- DE-A1- 2 254 659
- DE-B3- 102014 103 671
- GB-A- 665 506

## Beschreibung

Die vorliegende Erfindung betrifft eine Vorrichtung und ein Verfahren zum Transportieren und gegebenenfalls Verpacken kleinstückiger Artikel, insbesondere von Süßwaren, wie Hart- oder Weichkaramellen, Schokoladenstücken oder dergleichen, mit wenigstens zwei Rotationsköpfen, die um parallele Rotationsachsen drehbar sind, um die Artikel im Produktstrom zumindest abschnittsweise entlang der Teilkreise beider Rotationsköpfe zu transportieren und dabei von einem ersten an einen zweiten der Rotationsköpfe zu übergeben.

Eine solche Vorrichtung und ein solches Verfahren sind aus der EP 3 187 424 A1 bekannt.

Bei der bekannten Vorrichtung wirken die ersten und zweiten Rotationsköpfe nach dem Prinzip aneinander abrollender Kreise zusammen. Die Artikelübergabe vom ersten an den zweiten Rotationskopf muss dabei punktgenau auf der imaginären Verbindungslinie zwischen den Rotationsachsen beider Rotationsköpfe erfolgen, wo sich der Artikel im Wirkbereich beider Rotationsköpfe befindet. Zur Übergabe der Artikel in einer bestimmungsgemäßen Ausrichtung vom ersten an den zweiten Rotationskopf weist insbesondere der zweite Rotationskopf eine komplexe Bauform auf.

Weiterer verwandter Stand der Technik ist aus der EP 0 659 683 A1, die den Oberbegriff der Ansprüche 1 und 9 offenbart, sowie der DE 22 54 659 A1 und DE 10 2014 103671 B3 bekannt.

Der vorliegenden Erfindung liegt die Aufgabe zugrunde, die bekannte Vorrichtung und das bekannte Verfahren einfacher und kompakter zu gestalten.

Die eingangs genannte Aufgabe wird gelöst durch die Vorrichtung nach Anspruch 1. Diese Vorrichtung zum Transportieren und gegebenenfalls Verpacken kleinstückiger Artikel, insbesondere von Süßwaren, wie Hart- oder Weichkaramellen, Schokoladenstücken oder dergleichen, umfasst wenigstens zwei Rotationsköpfe, die um parallele Rotationsachsen drehbar sind, um die Artikel im Produktstrom zumindest abschnittsweise entlang der Teilkreise beider Rotationsköpfe zu transportieren und dabei von einem ersten an einen zweiten der Rotationsköpfe zu übergeben, wobei sich die Teilkreise der Rotationsköpfe bei Projektion auf eine senkrecht zu deren Rotationsachsen ausgerichtete Projektionsebene schneiden und der erste Rotationskopf ausgebildet ist, um jeden Artikel einzeln von der Aufnahmeposition zur Abgabeposition um eine parallel zur Rotationsachse ausgerichtete Schwenkachse entgegen der Rotationsrichtung des ersten Rotationskopfs zu schwenken. Bei herkömmlichen Vorrichtungen mit zwei Rotationsköpfen, die nach dem Prinzip aneinander abrollender Kreise zusammenwirken, tangieren sich die Teilkreise lediglich auf der

Verbindungslinie zwischen den beiden Rotationsachsen. In dieser Übergabeposition muss die Übergabe des Artikels zwischen den beiden Rotationsköpfen punktgenau erfolgen, da sich der Artikel nur dort im Wirkbereich beider Rotationsköpfe befindet. Bei der erfindungsgemäßen Vorrichtung, die zwei Rotationsköpfe mit sich schneidenden Teilkreisen umfasst, ist der potentielle Übergabebereich des Artikels zwischen den beiden Rotationsköpfen deutlich größer und erstreckt sich über die Schnittfläche der beiden Teilkreise. In dieser Schnittfläche der beiden Teilkreise befindet sich der Artikel im Wirkbereich beider Rotationsköpfe und kann somit in einer gewünschten Ausrichtung vom ersten an den zweiten Rotationskopf übergeben werden. Dadurch ergeben sich vielseitige Möglichkeiten zur Artikelübergabe bei vergleichsweise einfacher und kompakter Gestaltung der Vorrichtung.

Vorteilhafte Weiterbildungen der Erfindung sind Gegenstände der Unteransprüche.

Es kann von Vorteil sein, wenn die Teilkreise der Rotationsköpfe in derselben Ebene liegen. Dadurch erleichtern sich die Handhabung der Artikel in beiden Rotationsköpfen sowie die Übergabe der Artikel vom ersten an den zweiten Rotationskopf, da die Artikel nicht quer zur Teilkreisebene bewegt werden müssen.

Es kann sinnvoll sein, wenn der erste Rotationskopf wenigstens eines der folgenden Merkmale aufweist:
- Der erste Rotationskopf ist in Transportrichtung des Produktstroms stromaufwärts des zweiten Rotationskopfs angeordnet.
- Der Teilkreis des ersten Rotationskopfs verläuft durch den Mittelpunkt des Artikels in dessen Aufnahmeposition. Dadurch wird die Aufnahme des Artikels im erstem Rotationskopf erleichtert.
- Der erste Rotationskopf ist ausgebildet, um jeden Artikel vorzugsweise durch Klemmung über eine parallel zur Rotationsachse ausgerichtete Artikelachse ("über die Breite") aufzunehmen, wobei vorzugsweise die Achse eines den Artikel umgebenden Packmittelschlauchs tangential zum Teilkreis des ersten Rotationskopfs ausgerichtet ist. In dieser Ausrichtung kann der Artikel besonders einfach aufgenommen werden.
- Der erste Rotationskopf ist ausgebildet, um den Abstand jedes Artikels von der Rotationsachse des ersten Rotationskopfs zwischen der Aufnahmeposition und der Abgabeposition zu verringern, wobei vorzugsweise der Mittelpunkt des Artikels in dessen Aufnahmeposition auf dem Teilkreis des ersten Rotationskopfs liegt und der Mittelpunkt des Artikels in dessen Abgabeposition innerhalb des Teilkreises des ersten Rotationskopfs liegt. Bei dieser Ausführung ist eine besonders kompakte Anordnung der ersten und zweiten Rotationsköpfe möglich.
- Der erste Rotationskopf ist ausgebildet, um jeden Artikel durch Lösen der Klemmung über eine Artikelachse, die in einer senkrecht zur Rotationsachse ausgerichteten Ebene liegt, vorzugsweise in der Teilkreisebene, abzugeben, wobei bevorzugt die Achse eines den Artikel umgebenden Packmittelschlauchs parallel zur Rotationsachse ausgerichtet ist. Bei dieser Ausführung gestaltet sich die Abgabe des Artikels in der bestimmungsgemäßen Ausrichtung an den zweiten Rotationskopf besonders einfach, da die über den Artikel überstehenden Enden des Packmittelschlauchs bei dieser Ausrichtung einfach zugänglich sind und von einem Haltebackenpaar des zweiten Rotationskopfs leicht gegriffen werden können.
- Der erste Rotationskopf ist ausgebildet, um jeden Artikel von der Aufnahmeposition bis zur Abgabeposition in derselben Ebene, vorzugsweise der Teilkreisebene des ersten Rotationskopfs, zu transportieren. Dadurch erleichtert sich die Handhabung des Artikels im ersten Rotationskopf, weil der Artikel nicht quer zu dieser Ebene bewegt werden muss.
- Der erste Rotationskopf ist ausgebildet, um jeden Artikel von der Aufnahmeposition bis zur Abgabeposition mit kleinerer Winkelgeschwindigkeit als die Winkelgeschwindigkeit des ersten Rotationskopfs um dessen Rotationsachse zu rotieren. Bei dieser Ausführung kann die Vorrichtung besonders kompakt gestaltet werden. Zudem kann durch die Verringerung der Winkelgeschwindigkeit des Artikels gegenüber der Winkelgeschwindigkeit des Rotationskopfs ein längerer Zeitraum zur Übergabe des Artikels an den zweiten Rotationskopf ermöglicht werden.
- Der erste Rotationskopf ist ausgebildet, um jeden Artikel einzeln um die parallel zur Rotationsachse ausgerichtete Schwenkachse um 30 bis 60°, 40° bis 50° oder 45° entgegen der Rotationsrichtung des ersten Rotationskopfs zu schwenken, und bevorzugt um eine um die Schwenkachse schwenkbare Drehachse, die in einer senkrecht zur Schwenkachse ausgerichteten Ebene liegt, vorzugsweise in der Teilkreisebene des ersten Rotationskopfs, beispielsweise um 90° zu drehen, wobei die Drehbewegung um die Drehachse besonders bevorzugt zeitlich vor der Schwenkbewegung um die Schwenkachse beginnt oder sich beide Bewegungen zeitlich überlagern. Diese Ausführungen ermöglichen eine besonders vorteilhafte Ausrichtung des Artikels vor der Übergabe an den zweiten Rotationskopf.
- Der erste Rotationskopf umfasst eine Vielzahl von Halteeinrichtungen zum Halten jeweils wenigstens eines Artikels im Produktstrom, wobei jede Halteeinrichtung vorzugsweise eine Basis und ein Haltebackenpaar aufweist, wobei die Basis bevorzugt um die Schwenkachse schwenkbar ist und das Haltebackenpaar um die Drehachse drehbar an der Basis befestigt ist, wobei bevorzugt die Haltebacken eines Haltebackenpaars diametral gegenüberliegend bezüglich der Drehachse angeordnet und symmetrisch zu einer die Drehachse einschließenden Symmetrieebene öffen- und schließbar sind. Mit derartigen Halteeinrichtungen können die Dreh- und Schwenkbewegungen des Artikels besonders vorteilhaft ausgeführt werden. Natürlich kann jede Halteeinrichtung auch zum Halten mehrerer Artikel, beispielsweise in mehreren parallelen Produktströmen konfiguriert sein. Die Haltebackenpaare werden üblicherweise durch Kurvensteuerungen betätigt, die Steuerkurven enthalten, die von mit dem Rotationskopf umlaufenden Nockenfolgern abgetastet werden und ihrerseits mit den Haltebackenpaaren für deren Öffnungs- und Schließbewegung ihrer Haltebacken sorgen.
- Der erste Rotationskopf ist ausgebildet, um jede der Halteeinrichtungen vor der Aufnahme bzw. nach der Abgabe eines Artikels derart auszurichten, dass die Basis in der Aufnahmeposition im Wesentlichen tangential zu einem Kreis um die Rotationsachse ausgerichtet ist. Dadurch gestaltet sich die Aufnahme eines Artikels in der Aufnahmeposition besonders einfach.
- Der erste Rotationskopf ist ausgebildet, um jeden Artikel einzeln an eine Halteeinrichtung des zweiten Rotationskopfs zu übergeben.

In einer vorteilhaften Ausführung ist der erste Rotationskopf als Entnahmekopf ausgebildet.

Vorzugsweise wird zunächst nach dem Flow-Pack-System ein Packmittelschlauch hergestellt und die Artikel werden durch ein Zuführungssystem, das unterschiedlich ausgestaltet sein kann und z. B. aus einer Vereinzelung in einem Vereinzelungsteller, einer Bandzuführung, einer Kettenzuführung oder einer Strangzuführung bestehen kann, vereinzelt und vereinzelt aufgenommen. Z. B. erfolgt eine Schlauchbildung über einen Formschacht mit anschließender Siegelung der Längsnaht, wobei hierfür Heißsiegeln, Kaltsiegeln oder auch Ultraschallsiegeln in Betracht kommt.

Es kann aber auch eine Entnahme von Artikeln zunächst durch den Entnahmekopf aus einem Vereinzelungsteller erfolgen, worauf dem Artikel ein Packstoffstück entweder noch im Entnahmekopf oder in einem nächstfolgenden Rotationskopf zugeordnet wird.

Der einer Vereinzelungseinrichtung nachgeschaltete Entnahmekopf erfasst vorzugsweise den Packmittelschlauch einschließlich des oder der davon umgebenen Artikel(s), wobei gegebenenfalls eine Mehrzahl von in dem Packmittelschlauch beabstandeter Artikel vorliegen. Der Packmittelschlauch wird jeweils zwischen dem ergriffenen und den nächstfolgenden Artikeln zur Vorbereitung einer Einzelverpackung eines Artikels durchtrennt.

Vorzugsweise erfasst der Entnahmekopf den von dem Packmittelschlauch umhüllten Artikel, indem der Artikel z. B. über die Breite ergriffen wird, wobei unmittelbar nach dem Greifen durch Haltebackenpaare des Entnahmekopfes der davorliegende Messerschnitt zur Durchtrennung des Packmittelschlauches zwischen dem ergriffenen und dem stromaufwärts nächstfolgenden Artikel erfolgt. Hierbei sollte vorzugsweise der Packmittelschlauch während des Schnittes eine kleine Bahnspannung aufweisen.

Es kann sich als nützlich erweisen, wenn der zweite Rotationskopf wenigstens eines der folgenden Merkmale aufweist:
- Der zweite Rotationskopf ist in Transportrichtung des Produktstroms stromabwärts des ersten Rotationskopfs angeordnet.
- Der Teilkreis des zweiten Rotationskopfs verläuft durch den Mittelpunkt des Artikels in der Abgabeposition. Dadurch erleichtert sich die Abgabe des Artikels an eine nachgelagerte Einrichtung.
- Der zweite Rotationskopf ist ausgebildet, um jeden Artikel durch Klemmung über eine parallel zur Rotationsachse ausgerichtete Artikelachse, die vorzugsweise innerhalb des Teilkreises des zweiten Rotationskopfs liegt, aufzunehmen, oder durch Klemmung eines den Artikel umgebenden Packmittelschlauchs, dessen Schlauchachse parallel zur Rotationsachse ausgerichtet ist. Mit dieser Ausführung wird die Aufnahme des Artikels vom ersten Rotationskopf vereinfacht. Die Klemmerfassung des Packmittelschlauches kann über die Höhe, Breite oder über eine Schräglage des Packmittelschlauches erfolgen, wobei neben dem auf diese Weise erfolgenden Transportieren des Artikels zugleich die Luft aus den überstehenden Schlauchenden des Packmittelschlauches herausgedrückt wird. Der Packmittelschlauch kann durch die Klemmung zusammengedrückt und versiegelt werden, um den Artikel luftdicht zu verpacken.
- Der zweite Rotationskopf ist ausgebildet, um jeden Artikel durch Lösen der Klemmung über eine Artikelachse, die parallel zur Rotationsachse ausgerichtet ist, oder durch Lösen der Klemmung eines den Artikel umgebenden Packmittelschlauchs, dessen Schlauchachse parallel zur Rotationsachse ausgerichtet ist, abzugeben. Dadurch kann der Artikel in der bestimmungsgemäßen Ausrichtung einfach an eine nachgelagerte Einrichtung übergeben werden.
- Der zweite Rotationskopf ist ausgebildet, um jeden Artikel von der Aufnahmeposition bis zur Abgabeposition in derselben Ebene, vorzugsweise der Teilkreisebene des zweiten Rotationskopfs, zu transportieren. Damit erleichtert sich die Handhabung des Artikels im zweiten Rotationskopf, weil der Artikel nicht quer zu dieser Ebene bewegt werden muss.
- Der zweite Rotationskopf ist ausgebildet, um jeden Artikel von der Aufnahmeposition bis zur Abgabeposition mit größerer Winkelgeschwindigkeit als die Winkelgeschwindigkeit des Rotationskopfs um dessen Rotationsachse zu rotieren. Bei dieser Ausführung können die Transportgeschwindigkeiten der beiden Rotationsköpfe besonders gut aufeinander abgestimmt werden. Insbesondere kann durch Erhöhung der Winkelgeschwindigkeit des Artikels gegenüber der Winkelgeschwindigkeit des zweiten Rotationskopfs ein im erstem Rotationskopf entstandener Rückstand der Bewegungsgeschwindigkeit des Artikels gegenüber der Umfanggeschwindigkeit des ersten Rotationskopfs wieder aufgeholt werden, sodass der Artikel in der bestimmungsgemäßen Ausrichtung an eine nachgelagerte Einrichtung übergeben werden kann.
- Der zweite Rotationskopf ist ausgebildet, um den Abstand jedes Artikels von der Rotationsachse zwischen der Aufnahmeposition und der Abgabeposition zu vergrößern, wobei vorzugsweise der Mittelpunkt des Artikels in dessen Aufnahmeposition innerhalb des Teilkreises des zweiten Rotationskopfs liegt und der Mittelpunkt des Artikels in dessen Abgabeposition auf dem Teilkreis des zweiten Rotationskopfs liegt. Diese Ausführung erleichtert die Abgabe des Artikels an eine nachgelagerte Einrichtung.
- Der zweite Rotationskopf ist ausgebildet, um jeden Artikel einzeln um wenigstens eine Achse zu drehen oder zu schwenken, vorzugsweise um eine parallel zur Rotationsachse ausgerichtete Schwenkachse, beispielsweise um 30 bis 60°, 40° bis 50° oder 45° in der Rotationsrichtung des zweiten Rotationskopfs. Diese Ausführung ist besonders einfach realisierbar.
- Der zweite Rotationskopf umfasst eine Vielzahl von Halteeinrichtungen zum Halten jeweils wenigstens eines Artikels im Produktstrom, wobei jede Halteeinrichtung vorzugsweise ein Haltebackenpaar aufweist, wobei das Haltebackenpaar bevorzugt um die Schwenkachse schwenkbar ist, wobei das Haltebackenpaar besonders bevorzugt symmetrisch zu einer die Schwenkachse einschließenden Symmetrieebene öffen- und schließbar ist, wobei die Symmetrieebene ganz besonders bevorzugt die Bewegungsrichtung des Artikels beim Transport in die Aufnahmeposition einschließt. Mit einer derartigen Halteeinrichtung kann der Artikel besonders einfach aufgenommen und während des Transports gehalten werden.
- Der zweite Rotationskopf ist ausgebildet, um jede der Halteeinrichtungen derart auszurichten, dass die Symmetrieebene in der Aufnahmeposition beispielsweise um 30 bis 60°, 40° bis 50° oder 45° entgegen der Rotationsrichtung des zweiten Rotationskopfs zu einer durch die Rotationsachse verlaufenden Radialebene geneigt ist und/oder die Symmetrieebene in der Abgabeposition radial zur Rotationsachse des zweiten Rotationskopfs ausgerichtet ist. Vorzugsweise umfasst die Symmetrieebene die Artikelachse, über welche der Artikel vom zweiten Rotationskopf klemmend gehalten wird. Bei Aufnahme des Artikels durch den zweiten Rotationskopf schließt sich vorzugsweise das Haltebackenpaar des zweiten Rotationskopfs, bevorzugt unter Verdrängung von Luft aus dem Packmittelschlauch und Plättung sowie Versiegelung der Schlauchenden, während sich das Haltebackenpaar des ersten Rotationskopfs öffnet, um den Artikel an den zweiten Rotationskopf zu übergeben. Auf diese Weise ist eine besonders einfache Produktübergabe in der bestimmungsgemäßen Ausrichtung des Artikels möglich.

Vorzugsweise ist der zweite Rotationskopf als Greiferkopf ausgebildet.

Bei der Übergabe des Artikels an den Greiferkopf erfassen dessen Halteelemente (vorzugsweise ein Haltebackenpaar) den Packmittelschlauch rechts und links des Artikels ohne den Artikel selbst zu greifen. D. h. es wird nur der Packstoff ergriffen und nicht der Artikel.

Die Klemmerfassung des Packmittelschlauches kann über die Höhe, Breite oder über eine Schräglage des Packmittelschlauches erfolgen, wobei neben dem auf diese Weise erfolgenden Transportieren des Produktes zugleich die Luft aus den überstehenden Schlauchenden des Packmittelschlauches herausgedrückt wird.

Vorzugsweise werden die Schlauchenden des Packmittelschlauches beiderseits des Produktes zur Bildung von Flossen durch Siegelköpfe beiderseits des Greiferkopfes und vorzugsweise koaxial mit diesem kalt- oder vorzugsweise heißgesiegelt. Entsprechende Siegelköpfe werden vorzugsweise auf der gleichen Drehachse wie der Greiferkopf angeordnet, wobei allerdings auch Verlagerungen oder Versetzungen der Drehachsen der Siegelköpfe denkbar sind.

Durch den großen realisierten, wirksamen Drehwinkel der Siegelstationen, die mit dem Greiferkopf über einen Drehwinkel von z. B. 180° bis 250° korrespondierend umlaufen, wird eine hohe Siegelzeit realisiert, die wiederum eine entsprechende Dichtigkeit der Verpackung bewirkt. Auf diese Weise ist es vorzugsweise möglich, eine luftdichte Verpackung mit einer Dichtigkeitsklasse "insektendicht" im Bereich von 100 µm maximaler Kapillargröße zu erreichen.

Nachdem im Bereich des Greiferkopfes eine Quersiegelung der überstehenden Schlauchenden zur Flossenbildung erfolgt, wird die Packung vorzugsweise in einen Packkopf übergeben, wobei mit Hilfe von Halteorganen, insbesondere Haltebackenpaaren des Packkopfes, vorzugsweise über die Höhe am Produkt angegriffen wird und durch beiderseits des Packkopfes angeordnete und mit diesem synchron umlaufende Drehköpfe, die gesiegelten Flossen des Packmittelschlauches im Doppeldreheinschlag eingedreht werden und diese fertige Verpackung an einen Abgabekopf oder eine andere Abgabeeinrichtung abgegeben wird.

Während des Heißsiegelns der überstehenden Schlauchenden des Packmittelschlauches durch entsprechende Heißsiegelbacken beiderseits des Greiferkopfes werden üblicherweise auch die Halteorgane (Haltebackenpaare) des Greiferkopfes, die den vom Artikel überstehenden Packmittelschlauch erfassen, mit erwärmt, wobei hier allerdings dadurch, dass diese Halteorgane nicht im Bereich des Artikels selbst diesen ergreifen sondern nur am Packstoffschlauch anfassen, eine Wärmeübertragung auf den Artikel vermieden wird, was insbesondere für wärmeempfindliche Artikel von Vorteil ist.

Es kann sinnvoll sein, wenn die Vorrichtung einen dritten Rotationskopf aufweist, der um eine zu den Rotationsachsen der ersten und zweiten Rotationsköpfe parallele Rotationsachse drehbar ist, um die vom zweiten Rotationskopf abgegebenen Artikel im Produktstrom aufzunehmen und fertig zu verpacken. Mit dieser Ausführung ist eine Mehrkopf-Verpackungsmaschine realisierbar.

Es kann sich als zweckdienlich erweisen, wenn der Produktstrom der Artikel bei Projektion auf die Projektionsebene durch die Schnittpunkte und/oder Schnittfläche der Teilkreise beider Rotationsköpfe verläuft. Diese Ausführung erweist sich als besonders kompakt.

Es kann hilfreich sein, wenn jeder Artikel bei Übergabe vom ersten an den zweiten Rotationskopf (bei Projektion auf eine senkrecht zu deren Rotationsachsen ausgerichtete Projektionsebene) abschnittsweise oder vollständig zwischen den Schnittpunkten und/oder innerhalb der Schnittfläche der Teilkreise beider Rotationsköpfe angeordnet ist. Mit dieser Ausführung ist eine sichere Handhabung der Produkte möglich, insbesondere bei der Übergabe vom ersten an den zweiten Rotationskopf.

Es kann sinnvoll sein, wenn jeder Artikel bei Übergabe vom ersten an den zweiten Rotationskopf in Transportrichtung des Produktstroms (bei Projektion auf eine senkrecht zu deren Rotationsachsen ausgerichtete Projektionsebene) stromaufwärts einer Verbindungslinie zwischen den Rotationsachsen der ersten und zweiten Rotationsköpfe angeordnet ist. Im Gegensatz zu Rotationsköpfen, deren Teilkreise nach dem Prinzip aneinander abrollender Kreise tangential zueinander angeordnet sind, findet die Artikelübergabe vorzugsweise nicht auf der Verbindungslinie der beiden Rotationsachsen statt, wo sich die Teilkreise tangieren, sondern davor bzw. stromaufwärts davon im Produktstrom. Dadurch kann der Artikel länger im Wirkbereich beider Rotationsköpfe verweilen und es steht ein längerer Zeitraum zur Übergabe der Artikel vom ersten an den zweiten Rotationskopf zur Verfügung.

Die eingangs genannte Aufgabe wird ebenfalls gelöst durch ein Verfahren nach Anspruch 9, bzw. ein Verfahren zum Transportieren und gegebenenfalls Verpacken kleinstückiger Artikel, insbesondere von Süßwaren, wie Hart- oder Weichkaramellen, Schokoladenstücken oder dergleichen, vorzugsweise mit der Vorrichtung nach einer der vorangehenden Ausführungen, wobei die Artikel von wenigstens zwei um parallele Rotationsachsen drehbaren Rotationsköpfen im Produktstrom zumindest abschnittsweise entlang der Teilkreise beider Rotationsköpfe transportiert und dabei von einem ersten an einen zweiten der Rotationsköpfe übergeben werden, wobei sich die Teilkreise der Rotationsköpfe bei Projektion auf eine senkrecht zu deren Rotationsachsen ausgerichtete Projektionsebene schneiden, wobei jeder Artikel einzeln von der Aufnahmeposition zur Abgabeposition um eine parallel zur Rotationsachse ausgerichtete Schwenkachse entgegen der Rotationsrichtung des ersten Rotationskopfs geschwenkt wird. Die eingangs im Zusammenhang mit der erfindungsgemäßen Vorrichtung genannten Vorteile ergeben sich analog auch im Zusammenhang mit dem erfindungsgemäßen Verfahren.

Es kann nützlich sein, wenn jeder Artikel im ersten Rotationskopf und/oder im zweiten Rotationskopf direkt aufgenommen wird, vorzugsweise durch Klemmung des Artikels, bevorzugt über eine parallel zur Rotationsachse ausgerichtete Artikelachse; oder dass jeder Artikel im ersten Rotationskopf und/oder im zweiten Rotationskopf indirekt aufgenommen wird, vorzugsweise ausschließlich durch Klemmung eines den Artikel umgebenden Packmittels, bevorzugt an den über den Artikel vorstehenden Enden des zum Packmittelschlauch geformten Packmittels, besonders bevorzugt ohne Druck auf den Artikel auszuüben. Dadurch kann ein besonders kompaktes Verpackungsverfahren bereitgestellt werden.

Es kann dabei nützlich sein, wenn jedes Halbfabrikat im ersten Rotationskopf durch Klemmen des im Packmittel angeordneten Artikels durch das Packmittel hindurch gehalten wird ("über die Breite"). Bei dieser Ausführung sind keine gesonderten Haltemittel für den Artikel und das Packmittel erforderlich.

Es kann sich als praktisch erweisen, wenn jedes Halbfabrikat im zweiten Rotationskopf ausschließlich über die über den Artikel vorstehenden Enden des zum Packmittelschlauch geformten Packmittel gehalten wird, vorzugsweise durch Klemmen des Packmittels, bevorzugt ohne Druck auf den Artikel auszuüben. Dadurch kann der Artikel in der bestimmungsgemäßen Ausrichtung besonders einfach aufgenommen und schonend transportiert werden. Bei gleichzeitiger Siegelung der Packmittelschlauchenden im zweiten Rotationskopf besteht überdies eine geringe Gefahr der unbeabsichtigten Erwärmung des Artikels.

Weitere bevorzugte Ausführungen ergeben sich durch Kombinationen der Merkmale, die in der Beschreibung, den Ansprüchen und den Zeichnungen offenbart sind.

### Begriffe und Definitionen

### Teilkreis

Der Teilkreis des ersten (übergebenden) Rotationskopfs erstreckt sich mit konstantem Durchmesser um die Rotationsachse des ersten Rotationskopfs und verläuft vorzugsweise durch den Mittelpunkt des aufgenommenen Artikels in der Aufnahmeposition.

Der Teilkreis des zweiten (übernehmenden) Rotationskopfs erstreckt sich mit konstantem Durchmesser um die Rotationsachse des zweiten Rotationskopfs und verläuft vorzugsweise durch den Mittelpunkt des aufgenommenen Artikels in der Abgabeposition.

Beim Transport der Artikel im Produktstrom zumindest abschnittsweise entlang der Teilkreise beider Rotationsköpfe bewegen sich die Artikel nicht zwangsläufig auf den jeweiligen Teilkreisen, sondern gegebenenfalls innerhalb oder außerhalb davon.

### Produktstrom

Der Begriff Produktstrom bezeichnet eine Vielzahl von Artikeln, die hintereinander entlang einer Linie durch die Vorrichtung transportiert werden. Anstelle eines einzelnen Produktstroms können auch mehrere parallele Produktströme durch die Vorrichtung transportiert werden.

### Kurze Beschreibung der Figuren

Es zeigen:
Fig. 1 ein schematisches Schaubild der erfindungsgemäßen Vorrichtung zu einem ersten Zeitpunkt des erfindungsgemäßen Verfahrens, wobei die Rotationsköpfe und Artikel in den maßgeblichen Details dargestellt und unwesentliche Details weggelassen sind.
Fig. 2 ein schematisches Schaubild ähnlich zu Fig. 1 zu einem zweiten Zeitpunkt des erfindungsgemäßen Verfahrens.

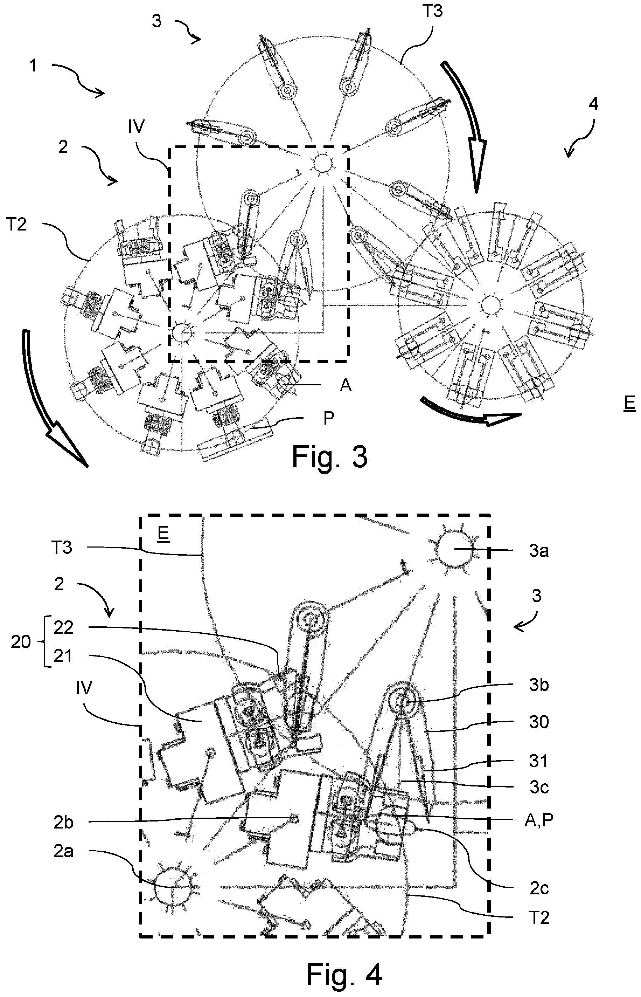

Fig. 3 ein schematisches Schaubild ähnlich zu Fig. 1, mit eingezeichnetem Detail IV.
Fig. 4 das vergrößerte Detail IV aus Figur 3.

### Detaillierte Beschreibung der bevorzugten Ausführungsbeispiele

Das bevorzugte Ausführungsbeispiel der Erfindung wird nachstehend mit Bezug auf die Zeichnungen im Detail beschrieben.

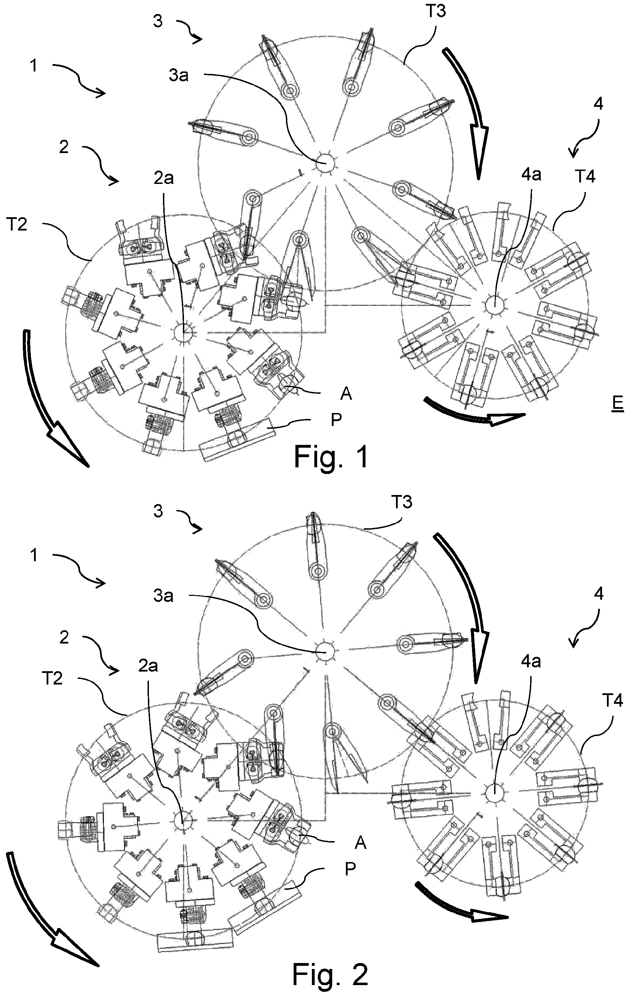

Die in Fig. 1 schematisch dargestellte, erfindungsgemäße Vorrichtung 1 ist zum Transportieren und Verpacken kleinstückiger Artikel A, insbesondere von Süßwaren, wie Hart- oder Weichkaramellen, Schokoladenstücken oder dergleichen, ausgebildet. Alle Bauteile dieser Vorrichtung sind für die Handhabung entsprechender Artikel A konfiguriert. Vorzugsweise sind die Innenkonturen der Halteeinrichtungen 20, 30 und Haltebacken 21, 31 der Rotationsköpfe 2, 3 an die Außenkonturen des Artikels A angepasst.

Im vorliegenden Fall ist der Artikel A näherungsweise kugelförmig und weist an einer Seite einen abgeflachten Boden auf. Der Artikel kann aber auch vollständig oder teilweise kugelförmig, quaderförmig, würfelförmig, zylindrisch oder dergleichen ausgebildet sein. Die Form des Artikels A ist nicht beschränkt. Der Artikel A kann einzelnen oder in Verbindung mit einem Packmittel P in der Vorrichtung 1 transportiert werden.

Die in Figur 1 schematisch dargestellte Vorrichtung 1 umfasst drei Rotationsköpfe 2, 3, 4, die um parallele Rotationsachsen 2a, 3a, 4a drehbar sind, um jeden Artikel A im vorzugsweise kontinuierlichen Produktstrom abschnittsweise entlang der Teilkreise T2, T3, T4 dieser drei Rotationsköpfe 2, 3, 4 zu transportieren und dabei von einem ersten Rotationskopf 2 an einen zweiten Rotationskopf 3 sowie von dem zweiten Rotationskopf 3 an einen dritten Rotationskopf 4 zu übergeben. Erfindungsgemäß schneiden sich die Teilkreise T2, T3 des ersten und des zweiten Rotationskopfes 2, 3 bei Projektion auf eine senkrecht zu deren Rotationsachsen 2a, 3a ausgerichtete Projektionsebene. Da die Teilkreise T2, T3, T4 aller Rotationsköpfe 2, 3, 4 in derselben Ebene liegen, schneiden sich die Teilkreise T2, T3 der ersten beiden Rotationsköpfe 2, 3 unmittelbar, während sich die Teilkreise T3, T4 des zweiten und des dritten Rotationskopfs 3, 4 auf einer Verbindungslinie zwischen deren Rotationsachse 3a, 4a umfangsseitig tangieren.

In sämtlichen Ansichten drehen sich der erste und der dritte Rotationskopf 2, 4 im Gegenuhrzeigersinn, während sich der zweite Rotationskopf 3 im Uhrzeigersinn dreht. Die Drehrichtungen der Rotationsköpfe 2, 3, 4 sind durch Pfeile angedeutet.

### Erster Rotationskopf 2

Der erste Rotationskopf 2 ist bezüglich des Produktstroms stromaufwärts des zweiten Rotationskopfs 3 angeordnet. Der Teilkreis T2 des ersten Rotationskopfs 2 verläuft durch den Mittelpunkt des Artikels A in dessen Aufnahmeposition (6-Uhr-Position).

Der erste Rotationskopf 2 umfasst insgesamt acht Halteeinrichtungen 20, die im Wesentlichen gleichmäßig um den Umfang des ersten Rotationskopfs 2 verteilt sind. Jede Halteeinrichtung 20 weist eine Basis 21 und ein Haltebackenpaar 22 auf. Die Basis 21 ist reversibel um ca. 45° entgegen der Rotationsrichtung des Rotationskopfs 2 um eine Schwenkachse 2b, die in etwa im Abstand des halben Radius' des Teilkreises T2 parallel zur Rotationsachse 2a angeordnet ist, schwenkbar. Das Haltebackenpaar 22 ist um eine in der Teilkreisebene des ersten Rotationskopfs 2 liegende und um die Schwenkachse 2b schwenkbare Drehachse 2c drehbar an der Basis 21 befestigt. Die Haltebacken eines Haltebackenpaars 22 sind diametral gegenüberliegend bezüglich der Drehachse 2c angeordnet und symmetrisch zu einer die Drehachse 2c einschließenden Symmetrieebene öffen- und schließbar.

Jede dieser Halteeinrichtungen 20 ist ausgebildet, um einen Artikel A in einer Aufnahmeposition durch Klemmung "über die Breite" bzw. über eine parallel zur Rotationsachse 2a ausgerichtete Artikelachse aufzunehmen. Im vorliegenden Fall ist der Artikel A mit einem Packmittelschlauch P umgeben. Bei Aufnahme des Artikels A im ersten Rotationskopf 2 ist die Achse des Packmittelschlauchs P tangential zum Teilkreis T2 des ersten Rotationskopfs 2 ausgerichtet.

Im vorliegenden Fall befindet sich die Aufnahmeposition, in welcher die Aufnahme des Artikels A erfolgt, in der untersten Position ("6-Uhr-Position") des ersten Rotationskopfs 2. Wie dargestellt, ist jeder Artikel in einem Packmittelschlauch P angeordnet, der den Artikel A umfangseitig umgibt und dessen Schlauchachse tangential zum Teilkreis T2 des ersten Rotationskopfs 2 ausgerichtet ist.

Im ersten Rotationskopf 2 wird jeder Artikel A einzeln von der Abgabeposition ("6-Uhr-Position") (gegen den Uhrzeigersinn) bis zur Abgabeposition ("2-Uhr-Position") in der Teilkreisebene des ersten Rotationskopfs 2 transportiert und dabei mit der Basis 21 und dem Haltebackenpaar 22 um etwa 45° entgegen der Rotationsrichtung des ersten Rotationskopfs 2 um die parallel zur Rotationsachse 2a ausgerichtete Schwenkachse 2b, sowie um ca. 90° um die in der Teilkreisebene des ersten Rotationskopfs 2 liegende und um die Schwenkachse 2b verschwenkte Drehachse 2c gedreht.

In der Aufnahmeposition ("6-Uhr-Position") liegt der Mittelpunkt des Artikels A auf dem Teilkreis T2 des ersten Rotationskopfs 2. Dabei ist die Basis 21 im Wesentlichen tangential zu einem imaginären Kreis um die Rotationsachse 2a ausgerichtet und die Drehachse 2b senkrecht zur Basis 21 sowie nahezu radial zur Rotationsachse 2a. Durch das Schwenken des Artikels A um die Schwenkachse 2b wird der Abstand jedes Artikels A von der Rotationsachse 2a zwischen der Aufnahmeposition ("6-Uhr-Position") und der Abgabeposition ("2-Uhr-Position") verringert, sodass der Mittelpunkt des Artikels A in dessen Abgabeposition innerhalb des Teilkreises T2 des ersten Rotationskopfs 2 liegt. D.h., in der Aufnahmeposition ("6-Uhr-Position") entspricht der Radius des Mittelpunkts des Artikels A um die Rotationsachse 2a (RAufnahme) dem Radius des Teilkreises T2 (RT2) des ersten Rotationskopfs 2 (RAufnahme = RT2). In der Abgabeposition ("2-Uhr-Position") ist der Radius des Mittelpunkts des Artikels A um die Rotationsachse 2a (RAufnahme) dagegen kleiner als Radius des Teilkreises T2 des ersten Rotationskopfs 2 (RAbgabe < RT2; RAbgabe ∼ 0,9 * RT2). Durch Drehen des Artikels A um die Drehachse 2b werden insbesondere die nicht von den Haltebacken 21 gehaltenen und demnach freiliegenden Seiten des Artikels A sowie die Achse des Packmittelschlauchs P parallel zur Rotationsachse 2a ausgerichtet, um die Übergabe des Artikels A an den zweiten Rotationskopf 3 zu vereinfachen und den Artikel A zur nachfolgenden Bearbeitung entsprechend zu positionieren. Die Schwenk- und Drehbewegungen des Artikels A um die Schwenkachse 2b bzw. die Drehachse 2c werden vorzugsweise simultan ausgeführt. Dadurch kann vermieden werden, dass sich die Packmittelschläuche P aufeinanderfolgender Artikel A gegenseitig berühren.

In der Abgabeposition ("2-Uhr-Position") wird jeder Artikel A durch Lösen der Klemmung über die in der Teilkreisebene liegende Artikelachse abgegeben und einzeln an eine Halteeinrichtung 30 des zweiten Rotationskopfs 3 übergeben.

Nach der Abgabe der Artikel A werden die Halteeinrichtungen 20 des ersten Rotationskopfs 2 wieder derart positioniert, um jeweils einen neuen Artikel A in der Aufnahmeposition aufnehmen zu können. Dazu wird die Unterseite der Basis 21 senkrecht zu einer Radialen zur Rotationsachse 2a des ersten Rotationskopfs 2 bzw. tangential zu einem imaginären Kreis um die Rotationsachse 2a des ersten Rotationskopfs 2 ausgerichtet, sodass die Drehachse 2c im Wesentlichen radial zur Rotationsachse des ersten Rotationskopfs 2 ausgerichtet ist. Zusätzlich wird das Haltebackenpaar 22 um die Drehachse 2c gedreht und derart positioniert, dass ein weiterer Artikel A in der Aufnahmeposition ("6-Uhr-Position") durch Klemmung des Artikels A "über die Breite" bzw. über eine parallel zur Rotationsachse 2a des ersten Rotationskopfs 2 ausgerichtete Artikelachse aufnehmbar ist.

### Zweiter Rotationskopf 3

Der zweite Rotationskopf 3 ist bezüglich des Produktstroms stromabwärts des ersten Rotationskopfs 3 angeordnet und ausgebildet, um jeden Artikel A ausschließlich durch Klemmung des den Artikel A umgebenden Packmittelschlauchs P, dessen Schlauchachse parallel zur Rotationsachse 3a ausgerichtet ist, aufzunehmen, um jeden Artikel A von der Aufnahmeposition ("7-Uhr-Position") bis zur Abgabeposition ("4-Uhr-Position") in der Teilkreisebene des zweiten Rotationskopfs 3 zu transportieren, und jeden Artikel A durch Lösen der Klemmung des den Artikel A umgebenden Packmittelschlauchs P mit parallel zur Rotationsachse 3a ausgerichteter Schlauchachse in der Abgabeposition ("4-Uhr-Position") an einen dritten Rotationskopf 4 abzugeben. In der Aufnahmeposition ("7-Uhr-Position") wird der Artikel A ausschließlich über die über den Artikel A vorstehenden Enden des Packmittelschlauchs P gehalten. Bei der Aufnahme des Artikels A im zweiten Rotationskopf 3 werden die über den Artikel A vorstehenden Enden des Packmittelschlauchs unter Verdrängung von Luft plattgedrückt und vorzugsweise versiegelt. In der Aufnahmeposition ("7-Uhr-Position") ist der Artikel A in der Schnittfläche der Teilkreise T2, T3 des ersten und des zweiten Rotationkopfs 2, 3 angeordnet.

Der zweite Rotationskopf 3 umfasst insgesamt acht regelmäßig um den Umfang verteilt angeordnete Halteeinrichtungen 30 zum Halten jeweils eines Artikels A im Produktstrom. Jede Halteeinrichtung 30 umfasst ein Haltebackenpaar 31, das um eine parallel zur Rotationsachse 3a ausgerichtete Schwenkachse 3b schwenkbar ist und symmetrisch zu einer die Schwenkachse 3b einschließenden Symmetrieebene 3c öffen- und schließbar ist. Die Bewegungsrichtung des durch den ersten Rotationskopf 2 in die Aufnahmeposition ("7-Uhr-Position") des zweiten Rotationskopfs 3 transportierten Artikels A liegt exakt in der Symmetrieebene 3c des Haltebackenpaars 31 des zweiten Rotationskopfs 3. Die über den Artikel A überstehenden Enden des Packmittelschlauchs P können daher leicht von dem Haltebackenpaar 31 der Halteeinrichtung 30 des zweiten Rotationskopfs 3 geklemmt werden.

Durch Schwenken jedes im Haltebackenpaar 31 gehaltenen Artikels A um die Schwenkachse 3b um ca. 45° in der Rotationsrichtung des zweiten Rotationskopfs 3 wird der Abstand jedes Artikels A von der Rotationsachse 3a zwischen der Aufnahmeposition und der Abgabeposition vergrößert. Während der Mittelpunkt des Artikels A in dessen Aufnahmeposition innerhalb des Teilkreises T3 des zweiten Rotationskopfs 3 liegt, befindet sich der Mittelpunkt des Artikels A in dessen Abgabeposition T3 auf dem Teilkreis T3 des zweiten Rotationskopfs 3.

Nach Abgabe des Artikels A in der Abgabeposition ("4-Uhr-Position") des zweiten Rotationskopfs 3 an den dritten Rotationskopf 4 werden die Halteeinrichtungen 30 wieder zur Aufnahme eines weiteren Artikels A vorbereitet, wozu jedes Haltebackenpaar 31 um die Schwenkachse 3b um ca. 45° entgegen der Rotationsrichtung des zweiten Rotationskopfs 3 geschwenkt wird, um die Symmetrieebene 3c des Haltebackenpaares 31 auf die Bewegungsrichtung des ankommenden und aufzunehmenden Artikels A auszurichten.

### Dritter Rotationskopf 4

Der dritte Rotationskopf 4 umfasst insgesamt acht Halteeinrichtungen, die im Wesentlichen gleichmäßig um den Umfang des dritten Rotationskopfs 3 verteilt sind, und ist um eine zu den Rotationsachsen 2a, 3a der ersten und zweiten Rotationsköpfe 2, 3 parallele Rotationsachse 4a drehbar, um die vom zweiten Rotationskopf 3 abgegebenen Artikel A im Produktstrom aufzunehmen und fertig zu verpacken. Insbesondere können die im zweiten Rotationskopf 3 geplätteten und versiegelten Enden des den Artikel A umgebenden Packmittelschlauchs P im dritten Rotationskopf 4 weiterbearbeitet und geformt werden, zum Beispiel im Doppeldreheinschlag.

Es wird ausdrücklich darauf hingewiesen, dass die vorliegende Erfindung nicht auf das kontinuierliche Verpackungsprinzip beschränkt ist, sondern gleichermaßen bei diskontinuierlich oder teilweise diskontinuierlich und teilweise kontinuierlich arbeitenden Vorrichtungen zum Transport oder zur Verpackung von Artikeln Anwendung finden kann.

### Bezugszeichenliste

- 1: Vorrichtung
- 2: Erster Rotationskopf
- 2a: Rotationsachse des ersten Rotationskopfs
- 2b: Schwenkachse
- 2c: Drehachse
- 3: Zweiter Rotationskopf
- 3a: Rotationsachse des zweiten Rotationskopfs
- 3b: Schwenkachse
- 3c: Symmetrieebene
- 4: Dritter Rotationskopf
- 20: Halteeinrichtung (erster Rotationskopf)
- 21: Basis (erster Rotationskopf)
- 22: Haltebackenpaar (erster Rotationskopf)
- 30: Halteeinrichtung (zweiter Rotationskopf)
- 31: Haltebackenpaar (zweiter Rotationskopf)
- A: Artikel
- E: Projektionsebene
- P: Packmittel(schlauch)
- T2: Teilkreis des ersten Rotationskopfs
- T3: Teilkreis des zweiten Rotationskopfs
- T4: Teilkreis des dritten Rotationskopfs

## Patentansprüche

1. Vorrichtung (1) zum Transportieren und gegebenenfalls Verpacken kleinstückiger Artikel (A), insbesondere von Süßwaren, wie Hart- oder Weichkaramellen, Schokoladenstücken oder dergleichen, wobei die Vorrichtung (1) wenigstens zwei Rotationsköpfe (2, 3) umfasst, die um parallele Rotationsachsen (2a, 3a) drehbar sind, um die Artikel (A) im Produktstrom zumindest abschnittsweise entlang der Teilkreise (T2, T3) beider Rotationsköpfe (2, 3) zu transportieren und dabei von einem ersten an einen zweiten der Rotationsköpfe (2, 3) zu übergeben, wobei sich die Teilkreise (T2, T3) der Rotationsköpfe (2, 3) bei Projektion auf eine senkrecht zu deren Rotationsachsen (2a, 3a) ausgerichtete Projektionsebene (E) schneiden, **dadurch gekennzeichnet, dass** der erste Rotationskopf (2) ausgebildet ist, um jeden Artikel (A) einzeln von der Aufnahmeposition zur Abgabeposition um eine parallel zur Rotationsachse (2a) ausgerichtete Schwenkachse (2b) entgegen der Rotationsrichtung des ersten Rotationskopfs (2) zu schwenken.

2. Vorrichtung (1) nach Anspruch 1, **dadurch gekennzeichnet, dass** die Teilkreise (T2, T3) der Rotationsköpfe (2, 3) in derselben Ebene liegen.

3. Vorrichtung nach einem der vorangehenden Ansprüche, **dadurch gekennzeichnet, dass** der erste Rotationskopf (2) ausgebildet ist, um jeden Artikel (A) einzeln um eine um die Schwenkachse (2b) schwenkbare Drehachse (2c), die in einer senkrecht zur Schwenkachse (2b) ausgerichteten Ebene liegt, vorzugsweise in der Teilkreisebene des ersten Rotationskopfs (2), beispielsweise um 90° zu drehen, wobei die Drehbewegung um die Drehachse (2c) besonders bevorzugt zeitlich vor der Schwenkbewegung um die Schwenkachse (2b) beginnt oder sich beide Bewegungen zeitlich überlagern.

4. Vorrichtung nach einem der vorangehenden Ansprüche, **dadurch gekennzeichnet, dass** der zweite Rotationskopf (3) ausgebildet ist, um jeden Artikel (A) einzeln um wenigstens eine Achse (3a) zu drehen oder zu schwenken, vorzugsweise um eine parallel zur Rotationsachse (3a) ausgerichtete Schwenkachse (3b), beispielsweise um 30 bis 60°, 40° bis 50° oder 45° in der Rotationsrichtung des zweiten Rotationskopfs (3).

5. Vorrichtung (1) nach einem der vorangehenden Ansprüche, **dadurch gekennzeichnet, dass** die Vorrichtung (1) einen dritten Rotationskopf (4) aufweist, der um eine zu den Rotationsachsen (2a, 3a) der ersten und zweiten Rotationsköpfe (2, 3) parallele Rotationsachse (4a) drehbar ist, um die vom zweiten Rotationskopf (3) abgegebenen Artikel (A) im Produktstrom aufzunehmen und fertig zu verpacken.

6. Vorrichtung (1) nach einem der vorangehenden Ansprüche, **dadurch gekennzeichnet, dass** der Produktstrom der Artikel (A) bei Projektion auf die Projektionsebene (E) durch die Schnittpunkte und/oder Schnittfläche der Teilkreise (T2, T3) beider Rotationsköpfe (2, 3) verläuft.

7. Vorrichtung (1) nach einem der vorangehenden Ansprüche, **dadurch gekennzeichnet, dass** jeder Artikel (A) bei Übergabe vom ersten an den zweiten Rotationskopf (2, 3) abschnittsweise oder vollständig zwischen den Schnittpunkten und/oder innerhalb der Schnittfläche der Teilkreise (T2, T3) beider Rotationsköpfe (2, 3) angeordnet ist.

8. Vorrichtung (1) nach einem der vorangehenden Ansprüche, **dadurch gekennzeichnet, dass** jeder Artikel (A) bei Übergabe vom ersten an den zweiten Rotationskopf (2, 3) in Transportrichtung des Produktstroms stromaufwärts einer Verbindungslinie zwischen den Rotationsachsen (2a, 3a) der ersten und zweiten Rotationsköpfe (2, 3) angeordnet ist.

9. Verfahren zum Transportieren und gegebenenfalls Verpacken kleinstückiger Artikel (A), insbesondere von Süßwaren, wie Hart- oder Weichkaramellen, Schokoladenstücken oder dergleichen, vorzugsweise mit der Vorrichtung (1) nach einem der vorangehenden Ansprüche, wobei die Artikel (A) von wenigstens zwei um parallele Rotationsachsen (2a, 3a) drehbaren Rotationsköpfen (2, 3) im Produktstrom zumindest abschnittsweise entlang der Teilkreise (T2, T3) beider Rotationsköpfe (2, 3) transportiert und dabei von einem ersten an einen zweiten der Rotationsköpfe (2, 3) übergeben werden, wobei sich die Teilkreise (T2, T3) der Rotationsköpfe (2, 3) bei Projektion auf eine senkrecht zu deren Rotationsachsen (2a, 3a) ausgerichtete Projektionsebene schneiden, **dadurch gekennzeichnet, dass** jeder Artikel (A) einzeln von der Aufnahmeposition zur Abgabeposition um eine parallel zur Rotationsachse (2a) ausgerichtete Schwenkachse (2b) entgegen der Rotationsrichtung des ersten Rotationskopfs (2) geschwenkt wird.

10. Verfahren nach Anspruch 9, **dadurch gekennzeichnet, dass** jeder Artikel (A) im ersten Rotationskopf (2) und/oder im zweiten Rotationskopf (3) direkt aufgenommen wird, vorzugsweise durch Klemmung des Artikels (A), bevorzugt über eine parallel zur Rotationsachse ausgerichtete Artikelachse; oder dass jeder Artikel (A) im ersten Rotationskopf (2) und/oder im zweiten Rotationskopf (3) indirekt aufgenommen wird, vorzugsweise ausschließlich durch Klemmung eines den Artikel (A) umgebenden Packmittels (P), bevorzugt an den über den Artikel (A) vorstehenden Enden des zum Packmittelschlauch geformten Packmittels (P), besonders bevorzugt ohne Druck auf den Artikel (A) auszuüben.

## Claims

1. Device (1) for transporting and optionally packaging small-sized articles (A), in particular confectionery items, such as hard or soft caramels, chocolate pieces or the like, the device (1) comprising at least two rotary heads (2, 3) that are rotatable about parallel axes of rotation (2a, 3a) in order to transport the articles (A) in the product stream at least in sections along the pitch circles (T2, T3) of the two rotary heads (2, 3) and to transfer them from a first to a second of the rotary heads (2, 3), the pitch circles (T2, T3) of the rotary heads (2, 3) intersecting when projected onto a projection plane (E) perpendicular to their axes of rotation ( 2a, 3a), **characterized in that** the first rotational head (2) is designed to pivot each article (A) individually from the receiving position to the delivery position about a pivot axis (2b) parallel to the rotational axis (2a) against the direction of rotation of the first rotational head (2).

2. Device (1) according to claim 1, **characterized in that** the pitch circles (T2, T3) of the rotary heads (2, 3) lie in the same plane.

3. Device according to one of the preceding claims, **characterized in that** the first rotation head (2) is designed to turn each article (A) individually about an axis of rotation (2c) that is pivotable about the pivot axis (2b) and lies in a plane perpendicular to the pivot axis (2b), preferably in the pitch circle plane of the first rotational head (2), for example through 90°, wherein the rotational movement about the axis of rotation (2c) beginning particularly preferably in time before the pivoting movement about the pivot axis (2b), or the two movements overlapping in time.

4. Device according to one of the preceding claims, **characterized in that** the second rotation head (3) is designed to rotate or pivot each article (A) individually about at least one axis (3a), preferably about a pivoting axis (3b) aligned parallel to the axis of rotation (3a), for example by 30 to 60°, 40° to 50° or 45° in the direction of rotation of the second rotation head (3).

5. Device (1) according to one of the preceding claims, **characterized in that** the apparatus (1) has a third rotary head (4) which can be rotated about an axis of rotation (4a) parallel to the axes of rotation (2a, 3a) of the first and second rotary heads (2, 3) in order to pick up the articles (A) delivered by the second rotary head (3) in the product stream and to finish packaging them.

6. Device (1) according to one of the preceding claims, **characterized in that** the product stream of articles (A), when projected onto the projection plane (E), runs through the points of intersection and/or the area of intersection of the pitch circles (T2, T3) of the two rotary heads (2, 3).

7. Device (1) according to one of the preceding claims, **characterized in that** each article (A), upon transfer from the first to the second rotary head (2, 3), is arranged in sections or completely between the points of intersection and/or within the area of intersection of the pitch circles (T2, T3) of the two rotary heads (2, 3).

8. Device (1) according to one of the preceding claims, **characterized in that** each article (A), when transferred from the first to the second rotary head (2, 3), is arranged in the transport direction of the product stream upstream of a connecting line between the axes of rotation (2a, 3a) of the first and second rotary heads (2, 3).

9. Method for transporting and optionally packaging small-piece articles (A), in particular confectionery items, such as hard or soft caramels, chocolate pieces or the like, preferably using the apparatus (1) according to one of the preceding claims, the articles (A) being transported by at least two rotary heads (2, 3) rotatable about parallel axes of rotation (2a, 3a) in the product stream, at least in sections, along the pitch circles (T2, T3) of the two rotation heads (2, 3) and are transferred from a first to a second of the rotation heads (2, 3), the pitch circles (T2, T3) of the rotation heads (2, 3) intersecting on a projection plane aligned perpendicularly to their axes of rotation (2a, 3a), **characterized in that** each article (A) is pivoted individually from the receiving position to the delivery position about a pivot axis (2b) aligned parallel to the axis of rotation (2a) against the direction of rotation of the first rotary head (2).

10. Method according to claim 9, **characterized in that** each article (A) is directly received in the first rotary head (2) and/or in the second rotary head (3), preferably by clamping the article (A), preferably about an article axis aligned parallel to the axis of rotation; or **in that** each article (A) is indirectly received in the first rotary head ( 2) and/or in the second rotation head (3), preferably solely by clamping a packaging means (P) surrounding the article (A), preferably at the ends of the packaging means (P) formed into a packaging means tube that project beyond the article (A), particularly preferably without exerting pressure on the article (A).

## Revendications

1. Dispositif (1) permettant de transporter et éventuellement d'emballer des articles sous forme de morceaux de petite taille (A), en particulier des confiseries, telles que des caramels durs ou mous, des morceaux de chocolat ou similaires, dans lequel le dispositif (1) comprend au moins deux têtes rotatives (2, 3) pouvant tourner autour d'axes de rotation (2a, 3a) parallèles afin de transporter les articles (A) dans le flux de produits au moins par sections le long des cercles primitifs (T2, T3) des deux têtes rotatives (2, 3) et de les transférer d'une première à une deuxième des têtes rotatives (2, 3), dans lequel les cercles primitifs (T2, T3) des têtes rotatives (2, 3) se coupent lorsqu'ils sont projetés sur un plan de projection (E) orienté perpendiculairement à leurs axes de rotation (2a, 3a), **caractérisé en ce que** la première tête rotative (2) est conçue pour faire pivoter chaque article (A) de manière individuelle autour d'un axe de pivotement (2b) orienté parallèlement à l'axe de rotation (2a), à l'encontre de la direction de rotation de la première tête rotative (2), depuis la position de réception jusqu'à la position de distribution.

2. Dispositif (1) selon la revendication 1, **caractérisé en ce que** les cercles primitifs (T2, T3) des têtes rotatives (2, 3) se trouvent dans le même plan.

3. Dispositif selon l'une quelconque des revendications précédentes, **caractérisé en ce que** la première tête rotative (2) est conçue pour faire tourner, par exemple de 90°, chaque article (A) de manière individuelle autour d'un axe de rotation (2c) pouvant pivoter autour de l'axe de pivotement (2b) et se trouvant dans un plan orienté perpendiculairement à l'axe de pivotement (2b), de manière préférée dans le plan de cercle primitif de la première tête rotative (2), dans lequel le mouvement de rotation autour de l'axe de rotation (2c) commence chronologiquement de manière particulièrement préférée avant le mouvement de pivotement autour de l'axe de pivotement (2b) ou bien les deux mouvements se superposent chronologiquement.

4. Dispositif selon l'une quelconque des revendications précédentes, **caractérisé en ce que** la deuxième tête rotative (3) est conçue pour faire tourner ou pivoter chaque article (A) de manière individuelle autour d'au moins un axe (3a), de manière préférée autour d'un axe de pivotement (3b) orienté parallèlement à l'axe de rotation (3a), par exemple selon un angle compris entre 30 et 60°, entre 40 et 50°, ou bien de 45°, dans la direction de rotation de la deuxième tête rotative (3).

5. Dispositif (1) selon l'une quelconque des revendications précédentes, **caractérisé en ce que** le dispositif (1) présente une troisième tête rotative (4) qui peut tourner autour d'un axe de rotation (4a) parallèle aux axes de rotation (2a, 3a) des première et deuxième têtes rotatives (2, 3) afin d'accueillir dans le flux de produits les articles (A) distribués par la deuxième tête rotative (3) et de finir de les emballer.

6. Dispositif (1) selon l'une quelconque des revendications précédentes, **caractérisé en ce que** le flux de produits des articles (A), lorsqu'il est projeté sur le plan de projection (E), passe par les points d'intersection et/ou la surface d'intersection des cercles primitifs (T2, T3) des deux têtes rotatives (2, 3).

7. Dispositif (1) selon l'une quelconque des revendications précédentes, **caractérisé en ce que** chaque article (A) est agencé complètement ou par sections entre les points d'intersection, et/ou à l'intérieur de la surface d'intersection, des cercles primitifs (T2, T3) des deux têtes rotatives (2, 3) lors du transfert de la première à la deuxième tête rotative (2, 3).

8. Dispositif (1) selon l'une quelconque des revendications précédentes, **caractérisé en ce que** chaque article (A) est agencé en amont d'une ligne de liaison entre les axes de rotation (2a, 3a) des première et deuxième têtes rotatives (2, 3) dans la direction de transport du flux de produits lors du transfert de la première à la deuxième tête rotative (2, 3).

9. Procédé de transport et éventuellement d'emballage d'articles sous forme de morceaux de petite taille (A), en particulier de confiseries, telles que des caramels durs ou mous, des morceaux de chocolat ou similaires, de manière préférée comprenant le dispositif (1) selon l'une quelconque des revendications précédentes, dans lequel les articles (A) sont transportés dans le flux de produits par au moins deux têtes rotatives (2, 3) pouvant tourner autour d'axes de rotation (2a, 3a) parallèles, au moins par sections le long des cercles primitifs (T2, T3) des deux têtes rotatives (2, 3), et sont transférés d'une première à une deuxième des têtes rotatives (2, 3), dans lequel les cercles primitifs (T2, T3) des têtes rotatives (2, 3) se coupent lorsqu'ils sont projetés sur un plan de projection orienté perpendiculairement à leurs axes de rotation (2a, 3a), **caractérisé en ce que** chaque article (A) est pivoté de manière individuelle autour d'un axe de pivotement (2b) orienté parallèlement à l'axe de rotation (2a), à l'encontre du sens de rotation de la première tête rotative (2), depuis la position de réception jusqu'à la position de distribution.

10. Procédé selon la revendication 9, **caractérisé en ce que** chaque article (A) est accueilli directement dans la première tête rotative (2) et/ou dans la deuxième tête rotative (3), de manière préférée par serrage de l'article (A), de manière préférée selon un axe d'article orienté parallèlement à l'axe de rotation ; ou **en ce que** chaque article (A) est accueilli de manière indirecte dans la première tête rotative (2) et/ou dans la deuxième tête rotative (3), de manière préférée exclusivement par serrage d'un moyen d'emballage (P) entourant l'article (A), de manière préférée au niveau des extrémités, faisant saillie au-dessus de l'article (A), du moyen d'emballage (P) réalisé sous forme de tuyau d'emballage, de manière particulièrement préférée sans exercer de pression sur l'article (A).
